# EUROPEAN PATENT APPLICATION

(11) **EP 4 810 792 A1**
(43) Date of publication of application: **23.09.2026**
(21) Application number: 26165667.2
(22) Date of filing: 18.03.2026
(51) Int. Cl.: F03D 3/04

(54) **WIND TURBINE ASSEMBLY**

(30) Priority: 19.03.2025 FI 20255227
(71) Applicant: Green Reflection Oy, 66500 Vähäkyrö (FI)
(72) Inventor: Myntti, Asko, 66500 Vähäkyrö (FI)
(74) Representative: Berggren Oy

(57) **Abstract**

The invention relates to a wind turbine assembly (100) that comprises a radial wind turbine (10), and a wind turbine cover (20) arranged to cover a part of the radial wind turbine (10) along the rotation direction (19) around the radial wind turbine (10). The wind turbine cover (20) comprises at least one air flow inlet (22), at least one air flow channel (24), and at least one air flow outlet (26), wherein the at least one air flow inlet (22) is configured to guide air flow (96) via the at least one air flow channel (24) to the air flow outlet (26). The air flow outlet (26) is configured to guide air flow (96) to a wind turbine blade (12) in order to provide a thrust force to the wind turbine blade (12) in the rotation direction (19). The wind turbine assembly (100) also comprises a first rotation platform (30).

## Description

### Technical field

The present invention generally relates to radial-axis wind turbines. More specifically, the present invention relates to radial-axis wind turbines comprising a wind turbine cover.

### Background

Radial-axis wind turbines are a known commodity in the field of wind turbine engineering. Typically, a radial-axis wind turbine is a certain type of a vertical-axis wind turbine with a rotational axis configured to rotate vertically from which wind turbine blades extend from in a radial direction.

Radial-axis wind turbines require specific design considerations as the wind turbine blades receive an alternating wind-induced thrust force both in favour of the rotation direction, accelerating rotation, and against the rotation direction, decelerating rotation. This results in an alternating force distribution on the wind turbine blades, which can lead to operational problems, such as mechanical stresses, vibrations or even stalling. These may decrease the operational efficiency of a radial-axis wind turbine dramatically or even cease operation completely. Additionally, when considering the utilization of the wind, a part of the utilization potential is wasted when a portion of the wind works against the rotation of the blades.

In order to overcome alternating force distribution issues, a stationary wind turbine cover may be configured to prevent wind from reaching a portion of the wind turbine blades. While the wind turbine cover may reduce operational issues, wind utilization potential problem remains, as potentially a major part of the wind is directed away from the wind turbine, causing losses in utilizable wind energy potential. A stationary wind turbine cover further increases this problem, as the changing velocity of wind cannot be taken into account.

### Summary

The scope of protection sought for various embodiments of the invention is set out by the independent claims. The embodiments, examples and features, if any, described in this specification that do not fall under the scope of the independent claims are to be interpreted as examples useful for understanding various embodiments of the invention. Some further aspects are defined in the dependent claims.

An objective of the present invention is to provide a wind turbine assembly. Another objective of the present invention is to provide a wind turbine assembly with a wind turbine cover that guides wind from outside of the wind turbine cover to inside of the wind turbine cover and from inside of the wind turbine cover to the wind turbine blade in order to provide further thrust force onto the wind turbine blades in a preferred direction.

According to an aspect, the present invention is a wind turbine assembly. The wind turbine assembly comprises a radial wind turbine, comprising wind turbine blades, a rotation axis in a first direction, a shaft in the first direction, and a rotation direction around the rotation axis.

Furthermore, the wind turbine assembly comprises a wind turbine cover arranged to cover a part of the radial wind turbine along the rotation direction around the radial wind turbine. The wind turbine cover comprises at least one air flow inlet, at least one air flow channel, and at least one air flow outlet.

The at least one air flow inlet is configured to guide air flow into the at least one air flow channel from outside the wind turbine cover. The at least one air flow channel is configured to guide air flow to at least one air flow outlet. The at least one air flow outlet is configured to guide air flow to a wind turbine blade in order to provide a thrust force to the wind turbine blade in the rotation direction.

Still further, the wind turbine assembly comprises a first rotation platform configured to enable a movement of at least the wind turbine cover around the radial wind turbine for blocking wind from the wind turbine blades on one side of the radial wind turbine to reduce a thrust force to the wind turbine blades into an opposite direction relative to the rotation direction. The rotation platform may, preferably, be a rail-based system, such as comprising one or more rails along which the wind turbine cover is movable based on the direction of the wind.

**In** addition, the wind turbine assembly comprises a wind turbine cover, the wind turbine cover comprising a first funnel-shaped extension, and a second funnel-shaped extension, and a second rotation platform to enable the movement of at least the first tunnel-shaped extension.

The advantage of the present invention is the reduced effect of alternating force distribution on the wind turbine blades with the wind turbine cover. Another advantage of the present invention is the improved utilization of the wind energy potential with the wind guiding properties of the wind turbine cover for providing thrust force to the wind turbine blade in a wind turbine blade rotation direction.

### Brief description of the drawings

Some embodiments of the invention are illustrated by way of example, and not by way of limitation, in the figures of the accompanying drawings.
- Figure 1: illustrates schematically a wind turbine assembly comprising a funnel-shaped extension, two rotation platforms, a valve and a control system and its related components.
- Figure 2: illustrates schematically a wind turbine assembly comprising a funnel-shaped extension and one rotation platform.
- Figure 3: illustrates schematically a wind turbine assembly comprising two funnel-shaped extensions.
- Figure 4: illustrates schematically a wind turbine assembly comprising a circular funnel-shaped extension.
- Figure 5: illustrates schematically a wind turbine assembly comprising a rectangular funnel-shaped extension.
- Figure 6: illustrates schematically a wind turbine assembly.
- Figure 7: illustrates schematically a wind turbine assembly of Figure 6 from a different point-of-view.
- Figure 8: illustrates schematically a wind turbine assembly comprising guided air flow receiving members on wind turbine blades.
- Figure 9: illustrates schematically a wind turbine assembly comprising guided air flow receiving members on wind turbine blades, a valve and a control system and its related components.

### Detailed description

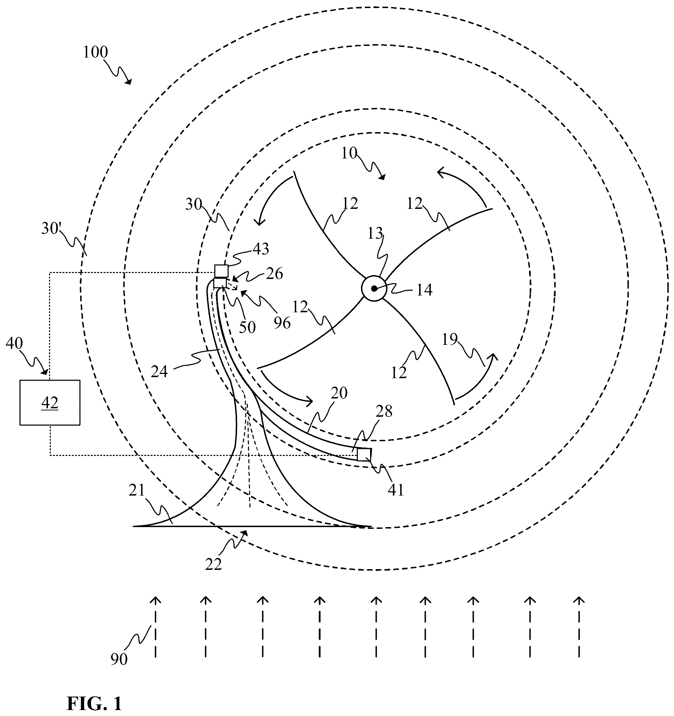

Figure 1 illustrates schematically an embodiment of a wind turbine assembly 100, as seen from a direction in parallel with a direction of rotation axis 14, that is, the first direction. The wind turbine assembly 100 comprises a radial wind turbine 10 comprising wind turbine blades 12, a rotation axis 14 in the first direction, a shaft 13 in the first direction, and a rotation direction 19 around the rotation axis 14. The rotation direction 19 is around the rotation axis 14, a full revolution around the rotation axis being a 360° circle. The radial wind turbine 10 may comprise of at least two, preferably at least four, more preferably at least six wind turbine blades. In this embodiment, the radial wind turbine 10 comprises four wind turbine blades. The shape and radial length of the wind turbine blades 12 can vary and can be, for example, carved, arched or straight. In addition, the width of the wind turbine blades 12, extending in a direction substantially perpendicular to the direction of the radial length of the wind turbine blades 12, can be configured based on the material choice of the blades to ensure a lightweight design while still retaining rigidity sufficient enough for successful operation of the wind turbine assembly 100. The wind turbine blades 12 can be manufactured from, for example, fiberglass, carbon fiber, composite materials, metal such as aluminium or steel, plastic, canvas such as sailcloth, or the like, depending on the embodiment and parameters such as, for example, desired size and power output of the wind turbine assembly.

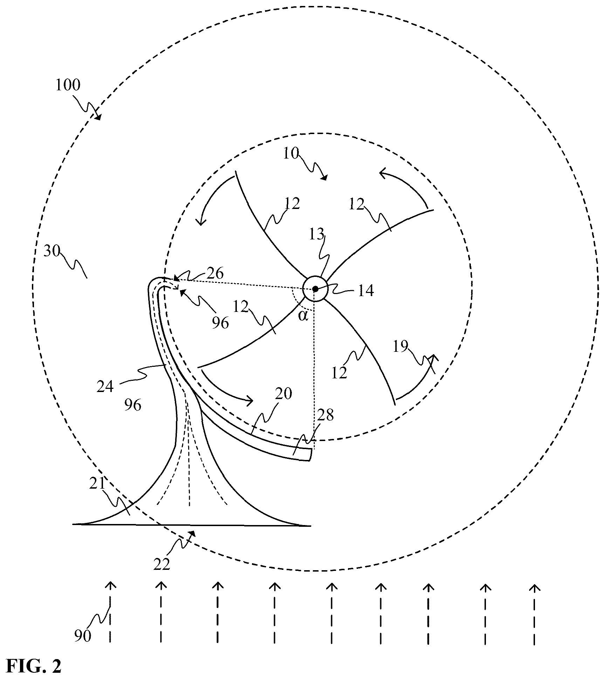

Furthermore, the embodiment of Figure 1 comprises a wind turbine cover 20 arranged to cover a part of the radial wind turbine 10 along the rotation direction 19 around the radial wind turbine 10. As the rotation direction 19 is circular, the extent of the covered part of the radial wind turbine 10 by the wind turbine cover 20 can be characterized by an angle α of a circular sector of the circle formed by a full revolution of the rotation direction 19, the arc of the sector formed by the wind turbine cover 20. The angle α formed by the circular sector, as illustrated in Figure 2, may be, for example, substantially at least 90°, or from 90° to 135°, or substantially at most 180°, or an angle value in the range between the aforementioned angle values. The shape of the wind turbine cover 20, as seen in Figure 1, may also be configured to be different from an arc of a circle, e.g. it may contain angles.

In the embodiment of Figure 1, the wind turbine cover 20 further comprises a first funnel-shaped extension 21, comprising an air flow inlet 22 to introduce air flow 96 from an outside to an inside of wind turbine cover 20, at least one air flow channel 24 to guide air flow 96 within the wind turbine cover 20, and at least one air flow outlet 26 to introduce air flow 96 from an inside to an outside of a wind turbine cover 20. The air flow channel 24 is configured to guide air flow 96 to the air flow outlet 26. The air flow outlet 26 is configured to guide air flow 96 to a wind turbine blade 12 in order to provide a thrust force to the wind turbine blade 12 in the rotation direction 19. Thus, depending on the extent and amount of the at least one air flow inlet 26, the at least one air flow channel 24, and the at least one air flow outlet 26, the wind turbine cover 20 may be substantially hollow.

Preferably, a surface area of the at least one air flow inlet 22 is greater than a surface area of the at least one air flow outlet 26, more preferably, the total surface area of a plurality of air flow inlets 22 is greater than the total surface area of the at least one air flow outlet 26 to accelerate air flow 96 velocity within the at least one air flow channel 24 in order to further increase the thrust force provided to the wind turbine blade in the rotation direction 19. Thus, a preferably combination of air flow inlets 22, air flow channels 24, and air flow outlets 26 can be configured to suit a specific wind turbine assembly 100 embodiment. This applies to any wind turbine assembly 100 within the scope of this application, whether being illustrated or not.

As illustrated in Figure 1, the at least one air flow inlet 22 and the at least one air flow outlet 26 are on separate sides of the wind turbine cover 20 so that the at least one air flow inlet 22 is/are facing the wind 90. This applies to any wind turbine assembly 100 within the scope of this application, whether being illustrated or not.

In the embodiment of Figure 1, the wind turbine cover 20 further comprises an optional wind blocking portion 28, being a part of the wind turbine cover 20 that does not comprise air flow 96 guiding. The wind blocking portion 28 of the wind turbine cover 20 acts as a cover for blocking wind 90 from the wind turbine blades 12 on one side of the radial wind turbine. Alternatively, the wind blocking portion 28 may comprise at least one air flow inlet 22, at least one air flow channel 24 and at least one air flow outlet 26. Alternatively, the wind turbine cover 20 does not comprise the wind blocking portion 28, i.e. is optional.

In the embodiment of Figure 1, the wind turbine cover 20 comprises one air flow inlet 22 comprised in the first funnel-shaped extension 21 for guiding air into the air flow channel 24, which consequently guides the air flow 96 to the air flow outlet 26.

In the embodiment of Figure 1, the first funnel-shaped extension 21 is of round shape and thus it tapers from the air flow inlet 22 towards the air flow channel 24 in a shape that resembles a cone. The shape of the first funnel-shaped extension 21 may be, for example, a circle i.e. round, an oval, a square, or the like.

Furthermore, the embodiment of Figure 1 comprises a first rotation platform 30 configured to enable a movement of at least the wind turbine cover 20 around the radial wind turbine 10 for blocking wind 90 from the wind turbine blades 12 on one side of the radial wind turbine to reduce a thrust force to the wind turbine blades into an opposite direction relative to the rotation direction 19, and a second rotation platform 30' to enable the movement of at least the first funnel-shaped extension 21. The first rotation platform 30 and/or the second rotation platform 30' may be, for example, a rail-based system, a rotary system, cable system, or the like.

The wind turbine cover 20 and its related components may be manufactured from similar materials as the wind turbine blades 12, as described before. In comparison to the wind turbine blades, it is not desirable for the wind turbine cover 20 to be rotated or moved by the wind-induced thrust force, as the feature of remaining still and not being affected by the wind-induced thrust force is desired, as the movement of the wind turbine cover 20 is enabled by the first rotation platform 30, Thus, the wind turbine cover 20 does not require as lightweight design as the wind turbine blades 12.

The wind turbine assembly 100 illustrated in Figure 1 may further comprise: a valve 50 in connection with the at least one air flow channel 24, the valve 50 being configured to adjust the amount of air flow 96 to be guided to the wind turbine blade, a control system 40, the control system 40 further comprising: at least one wind velocity sensor 41 configured to gather and transmit wind velocity information; a wind turbine blade location sensor 43, located within the proximity of the at least one air flow outlet 26, configured to gather and transmit wind turbine blade location information; and a controller 42, configured to receive and process: wind velocity information received from the at least one wind velocity sensor 41, and; wind turbine blade location information received from the at least one wind turbine blade location sensor 43.

If a plurality of wind velocity sensors 41 are comprised in the wind turbine assembly 100, forming a wind velocity sensor 41 system, separate wind velocity sensors 41 may be arranged at corresponding separate locations in the first direction.

Based on the processed wind velocity information, the controller 42 is configured to control the position of the wind turbine cover 10 in order to optimize the position of the wind turbine cover 20 in relation to the velocity of the wind 90. Additionally, based on the processed wind turbine blade location information, the controller 42 is configured to control the valve 50 to provide air flow 96 to a wind turbine blade 12 when the wind turbine blade 12 passes the at least one air flow outlet 26 to ensure maximum thrust force induced to the wind turbine blade 12. For example, a desirable direction for wind velocity may be a predetermined control value and the wind velocity sensors 41 may be used to detect the variation from that desired direction, thus the wind velocity sensor 41 may transmit this wind velocity information to the control system 40 and the wind turbine cover 20 may be rotated accordingly.

It is worth noting that the valve 50, control system 40 and its components: the controller 42; the wind velocity sensor 41; and wind turbine blade location sensor 40, depicted in Figure 1 are merely an illustration and do not necessarily represent the actual size, design, component location or other parameters of the control system 40. For the purposes of clarity, the described components, the valve 50, control system 40 and its components: the controller 42; the wind velocity sensor 41; and wind turbine blade location sensor 40, will not be illustrated in further Figures, but they may be comprised in any of the following illustrated embodiments, as may be understood.

The wind turbine assembly 100 may also comprise a generator mechanically coupled to the shaft 13 of the radial wind turbine for the production of electricity.

The wind turbine assembly 100 may, in an embodiment not illustrated, comprise two separate rotation platforms 30, 30', of which a first rotation platform supports the portion of the wind turbine cover 20 that comprises the air flow outlet 26 and the wind blocking portion 28, and of which a second rotation platform 30' supports the portion of the wind turbine cover that comprises the first funnel-shaped extension 21 to enable the movement of the first funnel-shaped extension 21. Similarly to a wind turbine cover 20 not comprising the first funnel-shaped extension 21, the wind turbine cover 20 may comprise a plurality of air flow inlets 22, a plurality of air flow channels 24 and a plurality of air flow inlets 26.

Figure 2 illustrates schematically an embodiment of the wind turbine assembly 100, as seen from a point-of-view similar to Figure 1, wherein the wind turbine assembly 100 comprises only the first rotation platform 30. Arranging only the first rotation platform 30 instead of two may be executed by increasing the area that the first rotation platform 30 covers, i.e. including a larger rotation platform in the wind turbine assembly 100 than, for example, in the embodiments that do not include a first funnel-shaped extension 21. The first rotation platform 30 may also be expanded in a manner that the first rotation platform 30 is configured to enable the movement of the radial wind turbine 10 and the wind turbine cover 20, i.e. so that both the radial wind turbine 10 and the wind turbine cover 20 are configured on the first rotation platform 30.

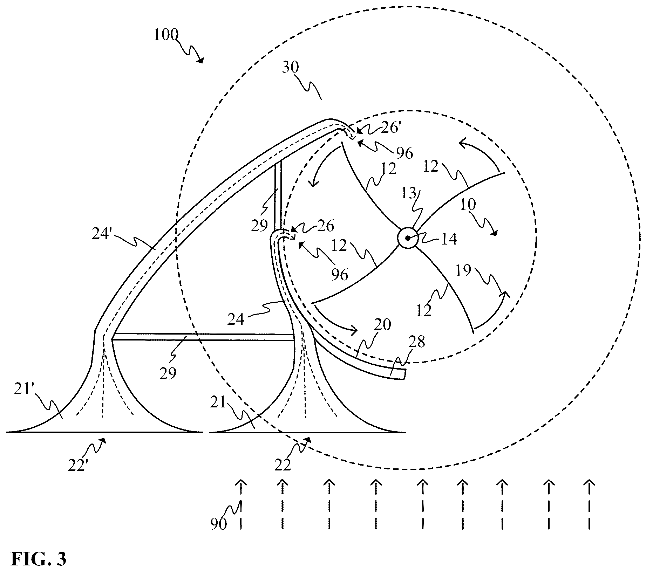

Figure 3 illustrates schematically an embodiment of the wind turbine assembly 100, as seen from a point-of-view similar to Figure 1, comprising a second funnel-shaped extension 21' and two support member 29 for supporting the second funnel-shaped extension 21'. The amount of support members 29 may vary depending on the wind turbine assembly 100 configuration parameters, such as size and weight, to ensure rigidity of the funnel-shaped extensions 21, 21' and wind turbine assembly 100 and thus, safe operation of the wind turbine assembly 100. The two support members 29 illustrated in Figure 3 are merely an illustration. A wind turbine assembly 100 comprising the first funnel-shaped extension 21 and the second funnel-shaped extension 21' may comprise only the first rotation platform 30 or both the first rotation platform 30 and the second rotation platform 30'.

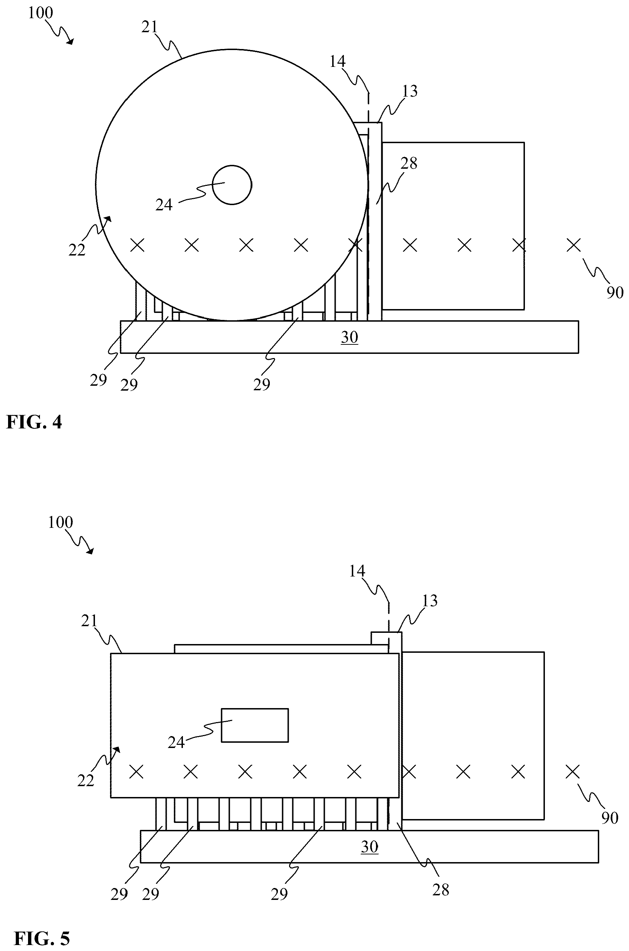

Figure 4 illustrates schematically an embodiment of the wind turbine assembly 100, similar to the one illustrated in Figure 1, as seen from the preferable direction of the wind 90 at a distance from which the components of the wind turbine assembly 100 are distinguishable from each other, the crosses illustrating wind 90 velocity vectors as seen from the direction of the wind 90, wherein the wind turbine cover 20 comprises a round-shaped first funnel-shaped extension 21 for guiding air into the wind turbine cover 20, a wind blocking portion 28 and a plurality of support members 29 for supporting the first funnel-shaped extension 21. The wind turbine assembly 100 comprises at least one support member 29, however, it is preferably to include a plurality of support members 29, as illustrated in Figure 4, to ensure rigidity of the wind turbine assembly 100 and thus, safe operation of the wind turbine assembly 100.

Figure 5, similarly to Figure 4, illustrates schematically an embodiment of the wind turbine assembly 100, wherein the wind turbine cover 20 comprises a rectangle-shaped first funnel-shaped extension 21 for guiding air into the wind turbine cover 20, a wind blocking portion 28 and a plurality of support members 29 for supporting the funnel-shaped extension 21.

The air flow channel 24 illustrated in Figures 4 and 5 is merely an illustration and the size and location of the air flow channel 24 within the first funnel-shaped extension 21 may vary depending on the embodiment.

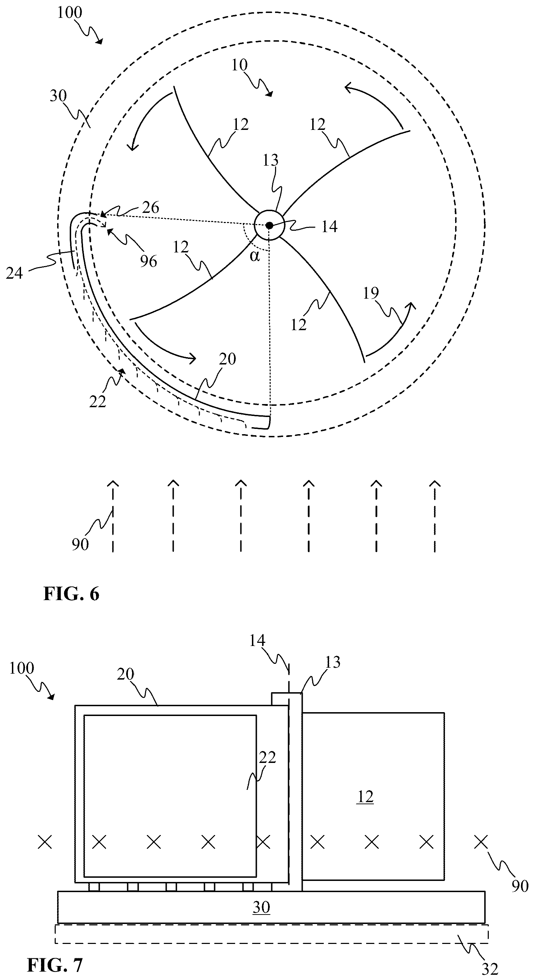

Figure 6 illustrates schematically an embodiment of the wind turbine assembly 100. In this embodiment, the wind turbine cover 20 comprises one air flow inlet 22, an air flow channel 24, and an air flow outlet 26. The air flow inlet 22 is configured to guide air flow 96 into the air flow channel 24 from outside the wind turbine cover 20. The wind turbine cover 20 may also comprise, for example, a plurality of air flow inlets 22 connected to a plurality of air flow channels 24 which are then connected to a plurality of air flow outlets 26. Alternatively, there may be an air flow inlet 22 connected to a plurality of air flow channels 24 which are connected to a plurality of air flow outlets 26. Still alternatively, there may be a plurality of air flow inlets 22 connected to an air flow channel 24 which is connected to a plurality of air flow outlets 26. Further alternatively, there may be a plurality of air flow inlets 22 connected to a plurality of air flow channels 24 which are connected to an air flow outlet 26, or the like. The aforementioned also applies to embodiments in which the wind turbine assembly 100 comprises at least one funnel-shaped extension.

Figure 7 illustrates schematically the embodiment of a wind turbine assembly 100 of Figure 6, as seen from the preferable direction of the wind 90 at a distance from which the components of the wind turbine assembly 100 are distinguishable from each other, the crosses illustrating wind 90 velocity vectors as seen from the direction of the wind 90. In this embodiment, the shape of the flow inlet 22 is a rectangle, but the shape may be, for example, a circle i.e. round, an oval, a square, or the like. If the wind turbine cover 20 comprises a plurality of air flow inlets 22, the shapes of separate air flow inlets 22 may also vary. The length of the wind turbine blades 12 in the first direction in the figure is merely an example and thus, the length may vary depending on size and general design parameters of the wind turbine assembly 100.

The wind turbine assembly 100 may, optionally, comprise a base structure 32 on an installation surface, such as on the ground, as illustrated in Figure 7. This may apply to embodiments of Figs. 1-6 as well. The base structure 32 extends in a horizontal plane and may thus be perpendicular relative to the first direction. Alternatively, the base structure 32 may extend in parallel with the first direction. This may be the case in embodiments where the shaft 13 is arranged horizontally, such as between two vertical supports.

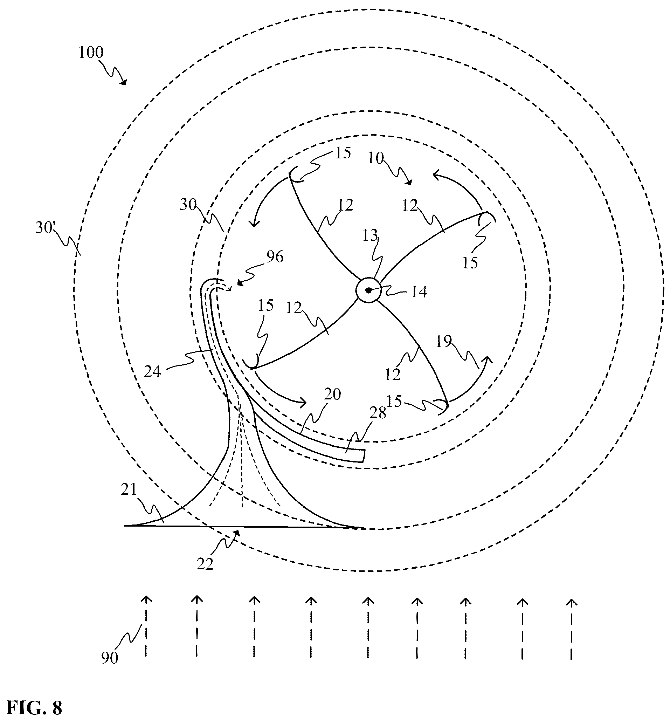

Figure 8 illustrates schematically an embodiment of the wind turbine assembly 100, being similar to the one illustrated in Figure 1, wherein the wind turbine blades 12 each comprise a guided air flow receiving member 15, such as (a) cup-shaped member(s), for air from the at least one air flow outlet 26 to be directed to. The guided air flow receiving members 15 are located at an outer edge of the wind turbine blades 12, when an inner edge of a wind turbine blade 12 is the edge attached to the shaft 13. The shape, height and size of the guided air flow receiving member 15 can be determined to effectively correspond to the size of the air flow outlet 26 the guided air flow receiving member 15 is configured to receive air flow 96 from. A wind turbine blade 12 may comprise at least one guided air flow receiving member 15 or a plurality of guided air flow receiving members 15, depending on, for example, the amount of air flow outlets 26 comprised in the wind turbine assembly 100. Thus, the shape of the guided air flow receiving member 15, may be, for example, a cup, a hemisphere, a half-cylinder, or the like. The guided air flow receiving member 15 may thus be, for example, an open vessel or a cup-like member.

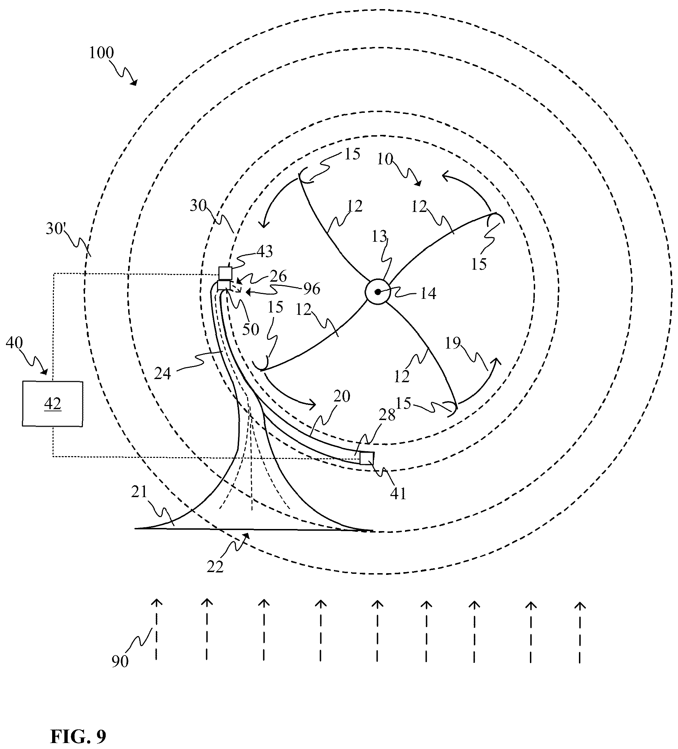

Figure 9 illustrates schematically an embodiment of a wind turbine assembly 100, similar to the one illustrated in Figure 8, comprising a control system 40 and guided air flow receiving members 15. Here, by releasing air flow 96 at a suitable point in time from the air flow outlet 26, by operating the valve 50 using the control system 40, to the guided air flow receiving member 15 arranged on the wind turbine blade 12, the rotation of the wind blades 12 can be further enhanced as the introduced thrust force to the guided air flow receiving member 15 and thus the wind turbine blade 12 is increased in comparison to previous illustrations. The guided air flow receiving members 15 may be comprised in any of the previously illustrated embodiments of the wind turbine assembly 100.

In an embodiment not illustrated, a wind turbine assembly 100 may comprise a roof component to cover at least a portion of the wind turbine 10. The roof component may be arranged, for example, on the wind turbine cover 20.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention.

## Claims

1. A wind turbine assembly (100), comprising:
a radial wind turbine (10), comprising:
wind turbine blades (12),
a rotation axis (14) in a first direction,
a shaft (13) in the first direction, and
a rotation direction (19) around the rotation axis (14);
a wind turbine cover (20) arranged to cover a part of the radial wind turbine (10) along the rotation direction (19) around the radial wind turbine (10); wherein the wind turbine cover (20) comprises;
at least one air flow inlet (22),
at least one air flow channel (24),
at least one air flow outlet (26),
wherein the at least one air flow inlet (22) is configured to guide air flow (96) into the at least one air flow channel (24) from outside the wind turbine cover (20),
wherein the at least one air flow channel (24) is configured to guide air flow (96) to at least one air flow outlet (26),
wherein the at least one air flow outlet (26) is configured to guide air flow (96) to a wind turbine blade (12) in order to provide a thrust force to the wind turbine blade (12) in the rotation direction (19); and
a first rotation platform (30) configured to enable a movement of at least the wind turbine cover (20) around the radial wind turbine (10) for blocking wind (90) from the wind turbine blades (12) on one side of the radial wind turbine to reduce a thrust force to the wind turbine blades into an opposite direction relative to the rotation direction (19).

2. The wind turbine assembly (100) of claim 1, wherein the radial wind turbine (10) comprises at least two, preferably at least four, more preferably at least six wind turbine blades (12).

3. The wind turbine assembly (100) of any of the claims 1-2, wherein the wind turbine cover (20) comprises:
a first funnel-shaped extension (21), such as having a round, an oval, a square, or a rectangular funnel-shape, for guiding air into the wind turbine cover (20);
a wind blocking portion (28); and
at least one support member (29) for supporting the first funnel-shaped extension (21).

4. The wind turbine assembly (100) of claim 3, comprising a second rotation platform (30') to enable the movement of at least the first funnel-shaped extension (21).

5. The wind turbine assembly (100) of any of the preceding claims, wherein the first rotation platform (30) and/or the second rotation platform (30') is a rail-based system, such as having one or more rails.

6. The wind turbine assembly (100) of any of the preceding claims, comprising a second funnel-shaped extension (21') and at least one support member (29) for supporting the second funnel-shaped extension (21').

7. The wind turbine assembly (100) of any of the preceding claims, wherein a surface area of the at least one air flow inlet (22) is greater than a surface area of the at least one air flow outlet (26).

8. The wind turbine assembly (100) of any of the preceding claims, wherein the wind turbine assembly (100) comprises a generator mechanically coupled to the shaft (13) of the radial wind turbine.

9. The wind turbine assembly (100) of any of the preceding claims, comprising a valve (50) in connection with the at least one air flow channel (24), the valve (50) being configured to adjust the amount of air flow (96) to be guided to the wind turbine blade.

10. The wind turbine assembly (100) of any of the preceding claims, comprising a control system (40), the control system (40) further comprising:
at least one wind velocity sensor (41) configured to gather and transmit wind velocity information; and
at least one controller (42) configured to receive and process wind velocity information received from the at least one wind velocity sensor (41), and based on the processed wind velocity information, control the position of the wind turbine cover (20).

11. The wind turbine assembly (100) of claims 8 and 9, wherein the control system (40) further comprises:
at least one wind turbine blade location sensor (43), located within the proximity of the at least one air flow outlet (26), configured to gather and transmit wind turbine blade location information;
wherein the at least one controller (42) comprised in the control system (40) is further configured to receive and process wind turbine blade location information received from the at least one wind turbine blade location sensor (43), and based on the processed wind turbine blade location information, control the valve (50) to provide air flow (96) to a wind turbine blade (12) when the wind turbine blade (12) passes the at least one air flow outlet (26).

12. The wind turbine assembly (100) of any of the preceding claims, wherein the wind turbine blades (12) comprise at least one guided air flow receiving member (15), such as a cup-like member or an open vessel, for air from the at least one air flow outlet (26) to be directed into.

13. The wind turbine assembly (100) of any of the preceding claims, wherein a movement path of the wind turbine cover (20) is a circle.

14. The wind turbine assembly (100) of any of claims 3-13, wherein one or more rails of the rail-based system extend around the shaft (13) in the rotation direction (19).

15. The wind turbine assembly (100) of any of the preceding claims, comprising a base structure (32) on an installation surface, such as on the ground, wherein the base structure (32) extends in a horizontal plane, wherein the first direction is perpendicular or parallel relative to the horizontal plane.
